# EUROPEAN PATENT APPLICATION

(11) **EP 2 412 972 A1**
(43) Date of publication of application: **01.02.2012**
(21) Application number: 10171300.6
(22) Date of filing: 29.07.2010
(51) Int. Cl.: F03D 3/00, F03D 9/00, F03D 11/04

(54) **Vertical axial wind power generation device**

(71) Applicant: Lee, Jia-Yuan, Shihlin District T'ai pei (TW)
(72) Inventor: Lee, Jia-Yuan, Shihlin District T'ai pei (TW)
(74) Representative: Chaillot, Geneviève

(57) **Abstract**

A vertical axis wind turbine power generation device includes a substantially n-shaped support frame (21) having a first board (211) and two second boards (212), and at least one reinforced plate (213) installed at a position of connecting the first and second boards (211, 212), a vane wheel (22) axially disposed between the second boards (212) and including a shaft (221) and vanes (222), such that the shaft (221) and the vanes (222) are installed parallel to the first board (211), and an electric generator (23) installed on an external side of the second board (212) and coupled to the shaft (221) of the vane wheel (22), such that the vane wheel (22) can be rotated by wind to generate electric energy. Both ends of the shaft (221) are limited by the support frame (21) to prevent a deviation in the rotation of the vane wheel (22). The support frame (21) can be installed to various rods or walls to provide a convenient way of utilizing electricity in an environmental protection manner.

## Description

### BACKGROUND OF THE INVENTION

### 1. Field of the Invention

The present invention relates to an area of wind power generation equipments, and more particularly to a vertical axis wind turbine power generation device capable of preventing a positional deviation during its operation and facilitating its application and installation.

### 2. Description of the Related Art

In recent years, the fluctuation of international oil price causes another wave of energy crisis, and scientists from different countries are eagerly looking for a new substitute energy source (or a green energy source) such as solar energy, wind energy, tidal energy, and even biomass energy, etc. Wind energy has been used for thousands of years, and applied to agricultural irrigation and grain milling, and wind energy is an unexhaustive, free-of-pollution, indigenous energy source. At present, the technology of wind power generators is developed rapidly, the electric power produced by wind energy is increasing, so that the cost of electric generation becomes lower significantly, and the wind power generation is distributed all over the places to satisfy the regional power supply requirement, reduce the loss of electric distribution, and lower the cost of electric power supply.

The principle of wind power generator resides on the conversion from wind energy into mechanical energy, and then mechanical energy converts into electric energy by driving an electric generator. Therefore, the performance of wind power generation depends on factors such as wind speed, wind magnitude, the design of vanes of the electric generator, and the windage area of the vanes. The wind electric generator can be divided into horizontal axis wind turbine generator or vertical axis wind turbine generator according to the relative installation position of a main shaft and a horizontal surface. The vertical axis wind turbine power generator requires no direction adjusting device, and adopts the resistance work or wing-shaped lift work to avoid the effect of the wind direction, but it comes with the drawback of lower efficiency of electric power generation.

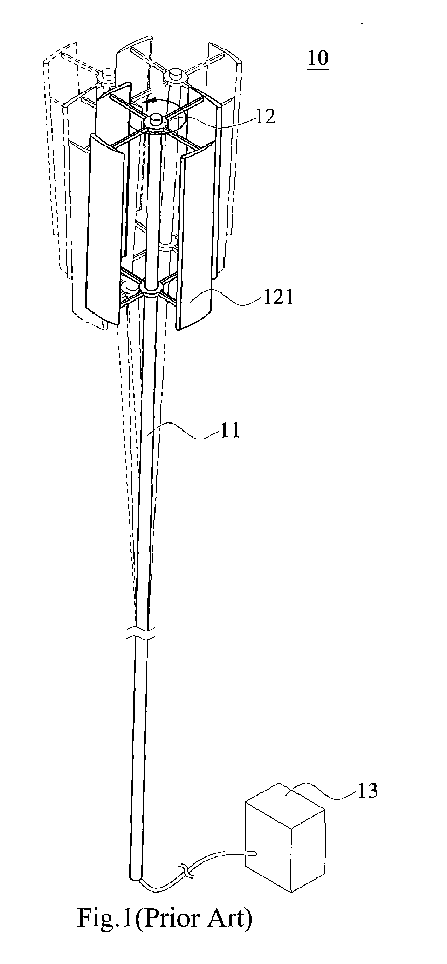

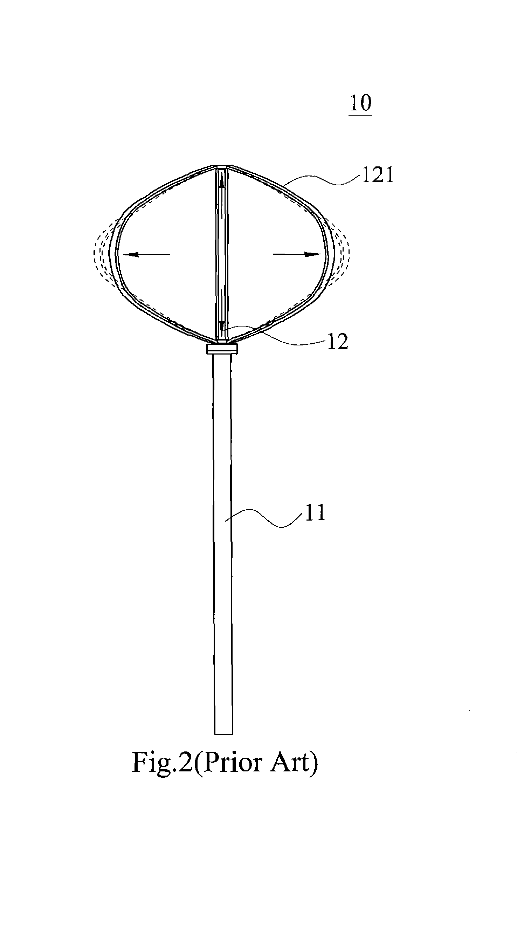

With reference to FIGS. 1 and 2 for schematic views of using a conventional vertical axis wind turbine power generator, the vertical axis wind turbine power generator 10 comprises a support rod 11 and a vane wheel 12, the vane wheel 12 having a plurality of different wing-shaped vanes 121 is axially coupled to the top of the support rod 11. When wind is exerted onto the vane wheel 12, a resistance or a work produced a lift force is imposed onto the vanes 121, and after the vane wheel 12 is rotated, mechanical energy is generated to drive the electric generator 13 installed at the bottom of the support rod 11 to generate electric energy. Since the vane wheel 12 is installed axially at a point of the support rod 11, therefore, the resistance produced by wind exeted onto the vanes 121 not only rotates the vane wheel 12 but also shakes the support rod 11. The higher the support rod 11, the larger is the shaking, which may cause an accident easily. Furthermore, each vane 121 of the vane wheel 12 may be deformed by the lift force, which may reduce the power generation efficiency.

In view of the aforementioned shortcomings of the conventional vertical axis wind turbine power generator 10, the present invention provides a vertical axis wind turbine power generation device, not only facilitating the installation and application and occupying space, but also providing a support frame design to avoid the issues of shaking and deformation occurred during the operation of the vane wheel and improve the practicality of the invention.

### SUMMARY OF THE INVENTION

Therefore, it is a primary objective of the invention to overcome the aforementioned shortcomings and deficiencies of the prior art by providing a vertical axis wind turbine power generation device that facilitates its installation and application and occupies less space.

Another objective of the present invention is to provide a vertical axis wind turbine power generation device with a support frame structure, such that both ends of the vane wheel can be limited to prevent the issue of shaking or deformation occurred during the operation of the power generation devices.

To achieve the foregoing objectives, the present invention provides a vertical axis wind turbine power generation device, comprising:
a support frame, including a first board and two second boards, substantially in an n-shape, and at least one reinforced plate installed at a connecting position of the first board and the second boards; a vane wheel, axially installed between the second boards, and including a shaft and a plurality of vanes, such that the shaft and the vanes are installed parallel to the first board; and an electric generator, installed on an external side of the second board, and coupled to a shaft of the vane wheel, for generating electric energy after the vane wheel is rotated by wind. The vanes of the vane wheel may be connected to the shaft by a plurality of support arms. The axial connecting position of the support frame is restricted by both ends of the vane wheel during its rotation, so that the vane wheel can be rotated more stably to prevent the vanes of the vane wheel from being deformed.

In a preferred embodiment, the reinforced plates are substantially in a triangular shape and coupled to both lateral edges of the first board and both lateral edges of the second board, respectively, for connecting the first board and the second board, to enhance the strength of the support frame and prevent the support frame from being deformed by wind when the vane wheel is rotated.

In a preferred embodiment, the first board further includes a plurality of fixing holes formed thereon and provided for securing to a wall or a rod, or facilitating a connection with other clamps or fixtures to improve the convenience of the installation and promote an extensive application of the power generation device.

In a preferred embodiment, the two second boards have a width greater than or equal to half of the width of the vane, and such structural design enhance the strength of the support frame and prevent the second boards from failing to support the vane wheel when the vanes encounter a strong resistance of the wind.

In a preferred embodiment of the present invention, the vertical axis wind turbine power generation device further comprises a containing box disposed on a side of the support frame, and the containing box contains a current conversion module and a battery, such that the current conversion module is electrically coupled to the electric generator and the battery. Such arrangement not only improves the aesthetic view, but also provides a modular design of the current conversion module and the battery to provide a convenient application, after the support frame is combined.

In a preferred embodiment, the second boards are provided for axially installing the shaft of the vane wheel and each second board includes a through hole, and a bearing installed in the through hole to improve the lubricating effect for the rotation of the vane wheel.

### BRIEF DESCRIPTION OF THE DRAWINGS

FIG. 1 is a first schematic view of applying a conventional vertical axis wind turbine power generator;
FIG. 2 is a second schematic view of applying a conventional vertical axis wind turbine power generator;
FIG. 3 is a schematic view of a preferred embodiment of the present invention;
FIG. 4 is a schematic view of a preferred embodiment of the present invention applied to a road lamp;
FIG. 5 is a first schematic view of using a preferred embodiment of the present invention to an external wall of a building;
FIG. 6 is a second schematic view of using a preferred embodiment of the present invention to an external wall of a building; and
FIG. 7 is a schematic view of using a preferred embodiment of the present invention to a road sign.

### DETAILED DESCRIPTION OF THE PREFERRED EMBODIMENTS

The technical characteristics of the present invention will become apparent with the detailed description of preferred embodiments and the illustration of related drawings as follows.

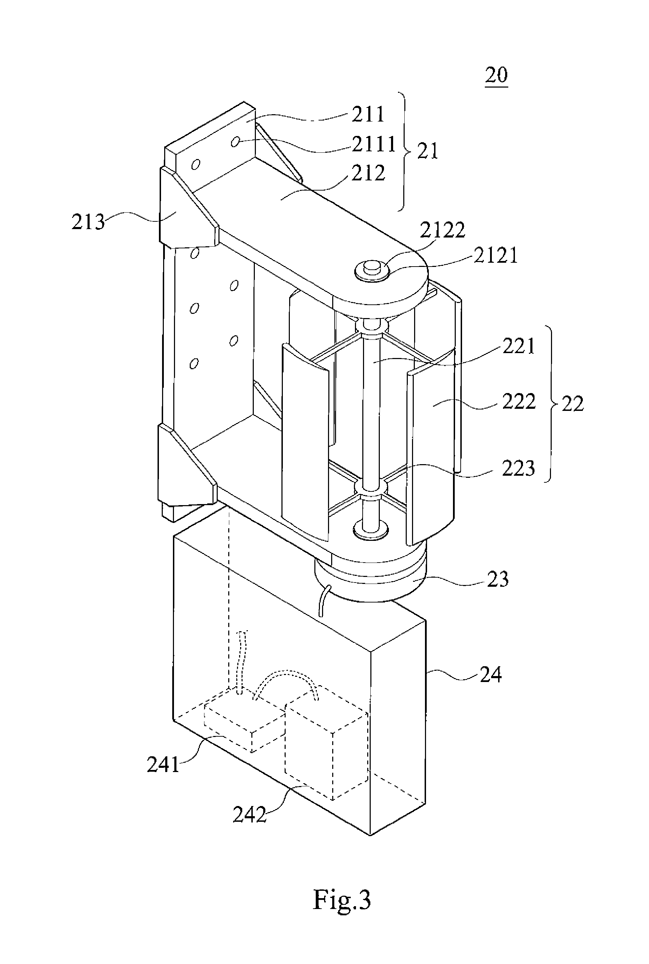

With reference to FIG. 3 for a schematic view of a preferred embodiment of the present invention, a vertical axis wind turbine power generation device 20 of the invention comprises a support frame 21, a vane wheel 22 and an electric generator 23.

The support frame 21 includes a first board 211 and two second boards 212 as shown in the figure, and the second boards 212 are combined to both distal portions of the first board 211 respectively, such that the first board 211 and the second boards 212 are combined into a substantially n-shape, and the distal portions of the first board 211 are still protruded from the connecting position of the second boards 212, and at least one reinforced plate 213 is installed the connecting position of the first board 211 and the second board 212. In addition, the reinforced plates 213 are substantially in a triangular shape, and connected to both lateral edges of the first board 211 and both lateral edges of the second board 212, for connecting the first board 211 and the second board 212, such that when the vane wheel 22 is rotated by wind, the vibration exerted onto the second boards 212 can be distributed effectively to the first board 211 to prevent the support frame 21 from being deformed. In addition, the first board 211 further includes a plurality of fixing holes 2111 secured to a wall or a rod to facilitate the installation.

The vane wheel 22 includes a shaft 221 and a plurality of vanes 222, and the vanes 222 of the vane wheel 22 are coupled onto the shaft 221 by a plurality of support arms 223, and both distal portions of the shaft 221 are axially disposed between the second boards 212, such that the shaft 221 and the vanes 222 are installed parallel to the first board 211. It is noteworthy to point out that the second boards 212 have a width equal to or greater than half of the width of the vane 222, and such design can enhance the strength of the second board 212 to prevent the vanes 222 from being deviated by the strong resistance of wind and prevent the second boards 212 from failing to support the vane wheel 22 effectively. In addition, a through hole 2121 is formed at a position for axially installing the shaft 221 of the vane wheel 22 at the second boards 212, and each through hole 2121 includes a bearing 2122 to improve the lubricating effect significantly for rotating the vane wheel 22.

The electric generator 23 is installed on an external side of the second board 212 as shown in the figure, and the electric generator 23 is installed at the bottom of the second board 212, and the electric generator 23 is coupled to the shaft 221 of the vane wheel 22, such that the vane wheel 22 can be rotated by wind to generate electric energy. The second boards 212 on both sides of the support frame 21 are provided for limiting both ends of the shaft 221 of the vane wheel 22, and such arrangement not only rotates the vane wheel 22 stably without deviation or shaking, but also prevents the vane 222 of vane wheel 22 from being deformed by up-and-down pulling during the rotating process.

The vertical axis wind turbine power generation device 20 further includes a containing box 24 installed on a side of the support frame 21 as shown in the figure, and the containing box 24 is installed below the support frame 21, and the containing box 24 contains a current conversion module 241 and a battery 242, such that the current conversion module 241 is electrically coupled to the electric generator 23 and the battery 242. After the electric energy generated by the electric generator 23 is converted by the current conversion module 241, the electric energy can be used directly for electric products, or stored into the battery 242.

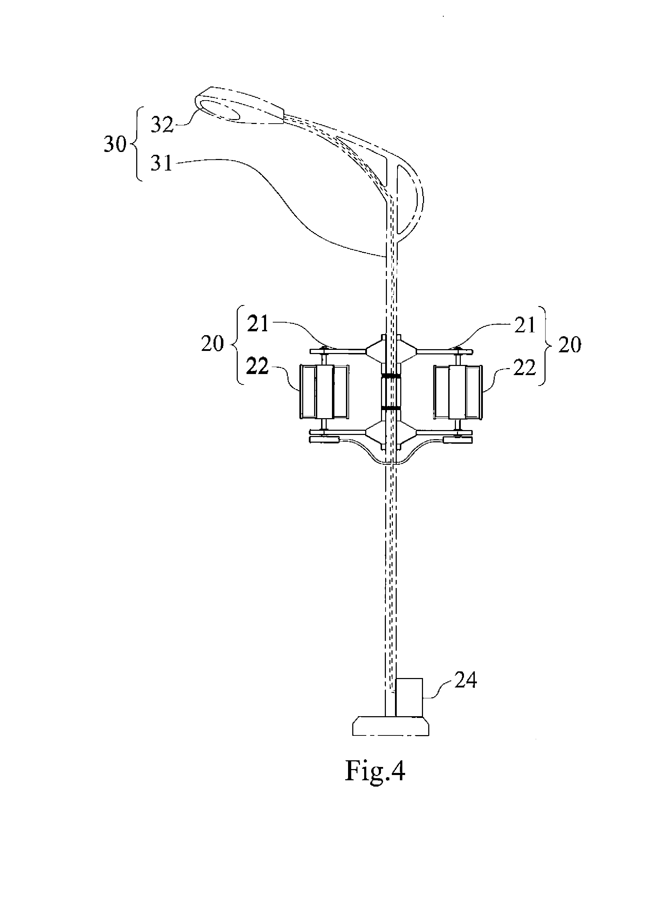

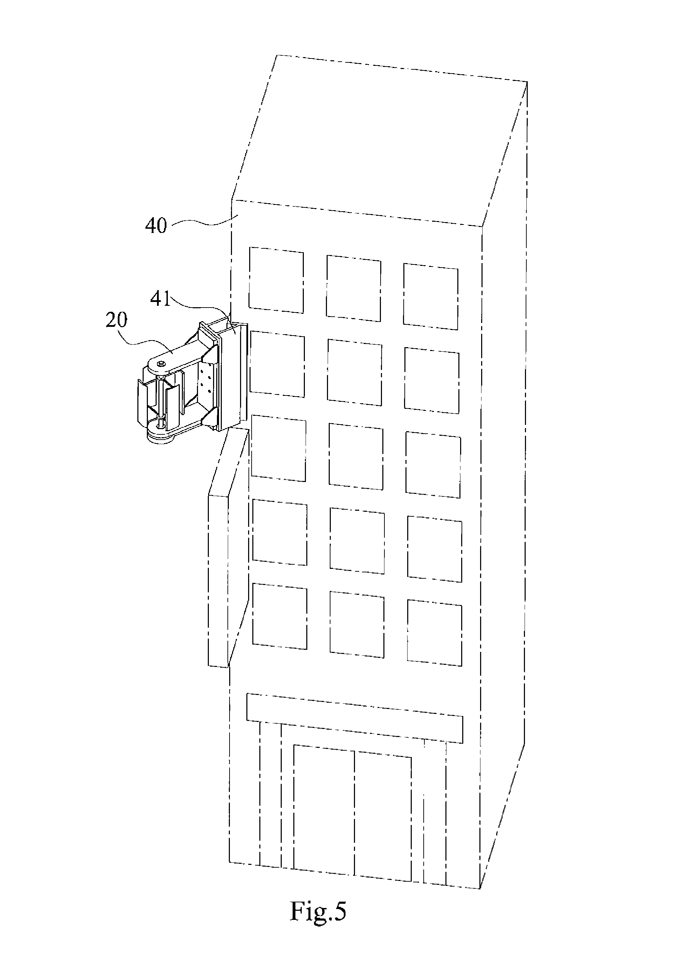

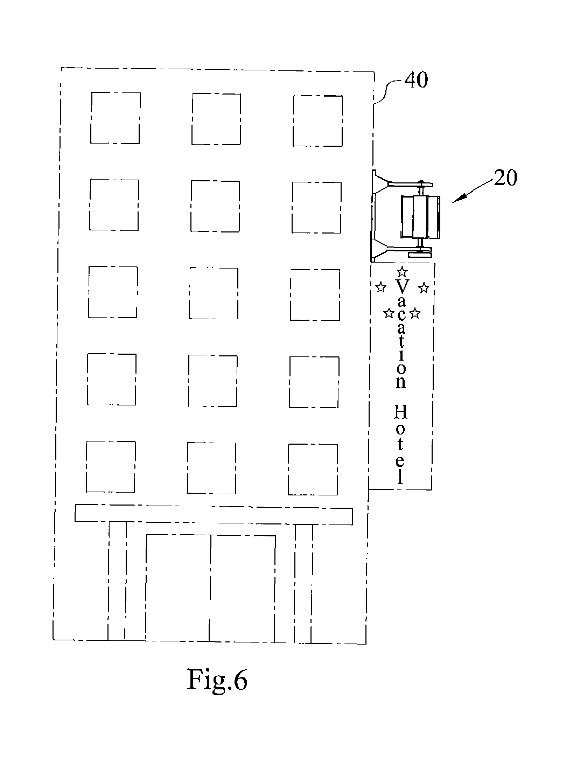

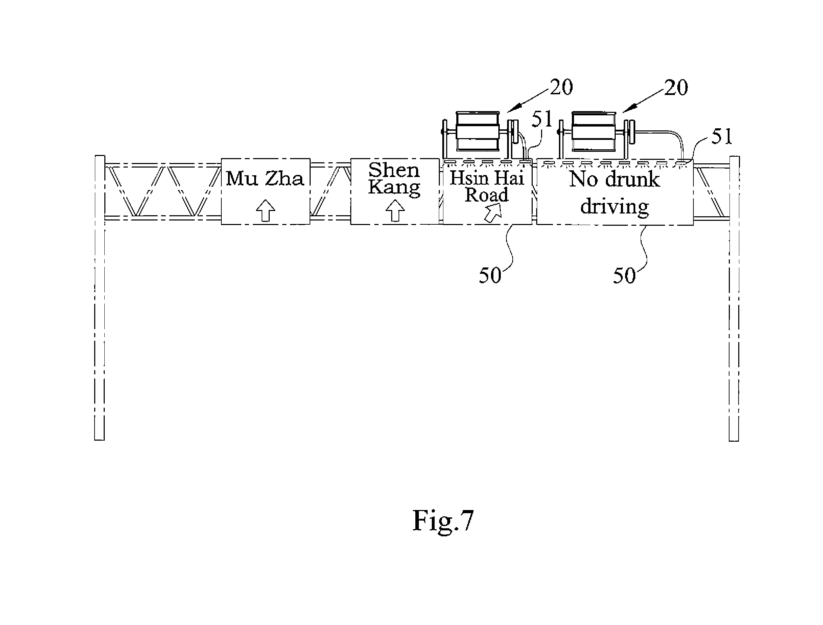

With reference to FIGS. 4 to 7 for schematic views of using preferred embodiments of the present invention in varies applications, FIG. 4 shows a vertical axis wind turbine power generation device 20 of the present invention to be applied to a road lamp, the vertical axis wind turbine power generation devices 20 are combined and used in a road lamp 30, and the support frames 21 are clamped and fixed onto a rod 31 of the road lamp 31 by circular clamps, and the containing boxes 24 are electrically coupled to a light source 32 of the road lamp 30 by a series-parallel connection. The electric energy generated by the vane wheels 22 which are rotated by wind is provided directly for the use by the road lamp 30, or for charging the battery 242 (not shown in the figure) at daytime. The wind power generation is combined and used for a general road lamp 30, and thus complying with the requirements of environmental protection and achieving the effect of saving electricity fees. With reference to FIGS. 5 and 6, one or more vertical axis wind turbine power generation devices 20 of the present invention are fixed to a wall 40 of a building. In FIG. 5, a fixed frame 41 mounted at a corner of the wall 40 is provided for connecting two adjacent walls 40 of the building and extends outward to a specific distance to mount the vertical axis wind turbine power generation device 20 onto the fixed frame 41, such that the vertical axis wind turbine power generation device 20 is installed at an angle of 45 degrees with respect to the wall 40 of the building for receiving the electric energy generated by the wind from both walls 40 of the building. In FIG. 6, the vertical axis wind turbine power generation device 20 is fixed directly to the wall 40, and the containing box 24 (not shown in the figure) is electrically connected to the public electricity facilities of the building to supply the required electric power to the building and save the expenses for the electric consumption substantially. In FIG. 7, the vertical axis wind turbine power generation device 20 is installed transversally above a sign 50 of a general road or highway. Since most signs 50 come with an illumination device 51 for their use at night time, wind can be used for generating electric energy to drive the illumination devices 51 to illuminate texts of the signs 50, after the containing box 24 (not shown in the figure) is electrically coupled to the illumination devices 51. Obviously, the invention not only complies with the environmental protection requirements, but also reduces the electricity cost effectively.

While the invention has been described by device of specific embodiments, numerous modifications and variations could be made thereto by those generally skilled in the art without departing from the scope and spirit of the invention set forth in the claims.

In summation of the description above, the present invention can improve over the prior art and comply with the patent application requirements, and thus is duly filed for patent application.

## Claims

1. A vertical axis wind turbine power generation device (20), comprising:
a support frame (21), including a first board (211) and two second boards (212),
substantially in an n-shape, and at least one reinforced plate (213) disposed at a connecting position of the first board (211) and the second boards (212);
a vane wheel (22), axially disposed between the second boards (212), and including a shaft (221) and a plurality of vanes (222), such that the shaft (221) and the vanes (222) are installed parallel to the first board (211); and
an electric generator (23), installed on an external side of the second board (212),
and coupled to a shaft (221) of the vane wheel (22), for generating electric energy after the vane wheel (22) is rotated by wind.

2. The vertical axis wind turbine power generation device (20) of claim 1, wherein the reinforced plates (213) are substantially in a triangular shape, and coupled to both lateral edges of the first board (211) and both lateral edges of the second board (212) respectively.

3. The vertical axis wind turbine power generation device (20) of claim 1, wherein the first board (211) further includes a plurality of fixing holes (2111) formed thereon.

4. The vertical axis wind turbine power generation device (20) of claim 1, wherein the two second boards (212) have a width equal to or greater than half of the width of the vane (222).

5. The vertical axis wind turbine power generation device (20) of claim 1, further comprising a containing box (24) disposed on a side of the support frame (21), and the containing box (24) contains a current conversion module (241) and a battery (242), such that the current conversion module (241) is electrically coupled to the electric generator (23) and the battery (242).

6. The vertical axis wind turbine power generation device (20) of claim 1, wherein the second boards (212) are provided for axially installing the shaft (221) of the vane wheel (22), and each second board (212) includes a through hole (2121), and a bearing (2122) installed in the through hole (2121).

7. The vertical axis wind turbine power generation device (20) of claim 1, wherein the vanes (222) of the vane wheel (22) are coupled to the shaft (221) by a plurality of support arms (223).
